Europäisches Patentamt

European Patent Office

Office européen des brevets

(19)

(11) Publication number: **0 053 003**

**A1**

(12)

# EUROPEAN PATENT APPLICATION

(21) Application number: **81305457.4**

(22) Date of filing: **19.11.81**

(51) Int. Cl.³: **F 01 P 11/14**
**F 01 P 11/02**

(30) Priority: **22.11.80 GB 8037549**

(43) Date of publication of application:
**02.06.82 Bulletin 82/22**

(84) Designated Contracting States:
**BE DE FR IT NL SE**

(71) Applicant: **IMI RADIATORS LIMITED**
**Baildon House Otley Road**
**Baildon West Yorkshire BD17 7JR(GB)**

(72) Inventor: **Allison, Dennis Fenwick**
**3 Colliers Lan**
**Shadwell Leeds 17(GB)**

(74) Representative: **Sykes, John Christopher et al,**
**IMI plc Patents & Licensing Department Kynoch Works**
**Witton Birmingham B6 7BA(GB)**

(54) Heat exchanger.

(57) A heat exchanger incorporating a valve (23) between its inlet (10) and outlet (11) header tanks, which valve (23) is constructed so that it tends to open in response to increased fluid pressure drop between the header tanks (10, 11) and in response to a low temperature in the cooling fluid, and to close in response to a decreased fluid pressure drop and in response to a higher temperature in the cooling fluid. The valve employs a pre-calibrated spring (20, 29) typically made of a shape memory effect (SME) alloy.

FIG. 1.

EP 0 053 003 A1

Heat Exchanger

This invention relates to heat exchangers in general, but has specific application in the field of heat exchangers which are used with internal combustion engines.

Heat exchangers, which may be typically of the tube/fin type, are employed for cooling fluids, the fluid being circulated internally through the conduits of such heat exchangers. The cooling medium which is typically air is passed over the exterior of the conduits and their associated fins. Such heat exchangers are commonly employed in the automotive industry for the cooling of water which has been heated in the engine water jacket, and they are also commonly employed in static engines and other machinery for use in cooling oil, hydraulic fluid or the like. The oil circulating in an internal combustion engine may also be cooled by heat exchangers of this type.

An automotive engine which has a water cooling jacket usually has connections to and from a radiator or heat exchanger which is often positioned within the engine compartment in such a manner that cooling air can be employed on the outside of the heat exchange surfaces to cool the fluid flowing through the core of the radiator. In order to prevent over-cooling of the engine, there is usually incorporated a thermostatic valve in the outlet conduit from the engine block, this thermostatic valve being closed when the cooling water is cold. In its closed position the valve forces cooling water through a by-pass conduit back to the engine block thereby short-circuiting the radiator.  When the circulating water is sufficiently hot, the thermostatic valve opens and permits the hot water to pass to the radiator for cooling.  A circulating pump is usually incorporated at the inlet of the cooling water to the engine block.

The radiator for internal combustion engines normally comprises inlet and outlet header tanks, between which extends a heat exchange core which comprises tubes through which the fluid to be cooled passes.  If blockage of a number of these tubes occurs in use, the pressure on the inlet side of the radiator increases with the consequent risk of damage to joints or to the flexible hoses and hose connections which take the water to be cooled from the engine block.  In certain countries, a cooling fluid other than water is employed, and this fluid may have a relatively high viscosity when cool, the fluid gradually becoming thinner as it is warmed in use.  The use of such liquids in cooling systems may cause higher than desired pressures in the inlet header tank and the associated hoses similarly giving rise to the risk of leakage.  This problem also applies in the case of oil coolers which employ heat exchangers of similar construction to those mentioned above.

According to the invention, a heat exchanger for cooling a fluid comprises inlet and outlet header tanks and a heat exchange core extending between said tanks, and a communicating passageway between said inlet and outlet tanks or between respective conduits supplying fluid to and removing fluid from said inlet and outlet tanks, said passageway being fractionally openable or closable by means of a valve, said valve being constructed so as to tend to open the passageway in response to an increased fluid pressure drop between the header tanks and in response to a low temperature in the fluid being cooled, and to tend to close said passageway in response to a decreased fluid pressure drop between the header tanks and in response to a higher temperature in the fluid being cooled.

By fractionally openable or closable, we mean that the valve is constructed so that the size of the opening under the circulation pressure head of the fluid to be cooled is continuously variable between a fully open position and a fully closed position.

Preferably the valve incorporates resilient spring biassing means, arranged so as to close the passageway in response to increased pressure drop between the header tanks. The spring biassing means is also constructed and made of such a material that it causes the valve to open in response to decreasing temperature, and to close in response to increasing temperature. The spring biassing means is suitably made of a shape memory effect alloy which may be in the form of a compression spring which has been calibrated to expand a predetermined amount in response to a given temperature change.

Where the invention is applied to a radiator for an internal combustion engine, the inlet and outlet header tanks may be on the same side of the core, or alternatively they may be on opposite sides of the core. Where the header tanks are on the same side of the core, the radiator is preferably of the cross-flow type with the incoming water, or a proporation of it, being passed across one part of the core to a closed header tank before returning across a second part of the core to the outlet header tank. In such a case the passageway may be provided in a partition across a continuous enclosure which extends along one side of the core. The support and/or location for the valve in such an arrangement may be integrally moulded with a plastics inlet/outlet header tank.

Where the invention is applied to a radiator having inlet and outlet tanks on opposite sides of the core, the passageway may extend between the inlet tank and the outlet tank or extensions thereof along one side of the core.  Alternatively, the passageway may link the respective conduits supplying fluid to and removing fluid from the inlet and outlet tanks.

Embodiments of the invention will now be described by way of example only with reference to the accompanying drawings in which:

Figure 1 is a schematic front elevation of a heat exchanger according to the invention,

Figure 2 shows an end elevation in cross-section of a detail of the heat exchanger of Figure 1,

Figure 3 shows in cross-section an alternative arrangement to the detail shown in Figure 2, and

Figure 4 shown schematically in front elevation an alternative embodiment of a heat exchanger according to the invention.

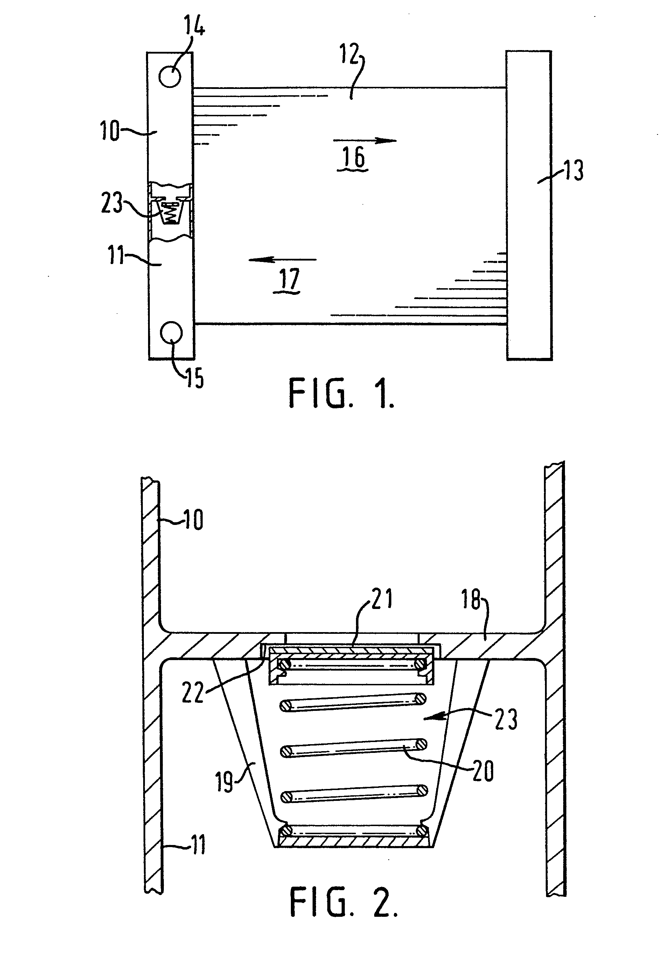

The heat exchanger shown in Figure 1 has an inlet header tank 10 and an outlet header tank 11, typically formed in a single moulding, on one side of a heat exchange core 12.  Core 12 comprises rows of parallel tubes with external secondary cooling surfaces in the form of fins (not shown).  On the other side of core 12 is a third header tank 13 which interconnects all the tube ends on that side core 12, but is otherwise closed.  An inlet connection 14 is provided to inlet header tank 10, and an outlet connection 15 is provided to outlet header tank 11.

A heat exchanger having this configuration would be suitable for cooling the circulating water in an internal combustion engine.  Heated water from the engine block would typically be directed by hoses (not shown) to inlet connection 14, pass into inlet tank 10 and then through, say half the tubes in core 12 in the direction indicated by arrow 16 to reach the third header tank 13. The partially cooled water would then return in the remainder of the tubing across core 12 in the direction of arrow 17 to the outlet header tank 11, and be returned to the engine block via outlet connection 15, suitable hoses and a pump (not shown).

Between the inlet header tank 10 and the outlet header tank 11 is a partition 18 with a centrally-positioned passageway (see Figures 1 and 2). A retaining cage 19 is mounted by suitable means eg adhesively bonded to the outlet header tank side of partition 18, and holds a compression spring 20 made of a shape memory effect alloy. Spring 20 urges a valve closure member 21 towards a seat 22 which surrounds the passageway in partition 18. The cage 19, spring 20, closure 21 and seat 22 together form a valve 23 which controls the water flow between the inlet header tank 10 and the outlet header tank 11.

In operation, water from the engine block is circulated through the radiator and when the water is cool, the spring 20 is in a retracted position, ensuring that the circulation pressure head keeps valve 23 open, thereby permitting a substantial proportion of water to pass direct to outlet header tank 11 without being further cooled in core 12. As the water gradually heats up as the engine warms up, spring 20 gradually lengthens to increase the resistance of valve 23 to the circulation pressure head thereby forcing water to pass through the core 22 of the radiator. The physical characteristics of the spring are such that at a predetermined temperature, the valve 23 is completely shut off. The "memory" of the spring alloy is predetermined in the manufacture of the spring to give the correct movement in response to the temperature rise in the water. The installation of a heat exchanger incorporating the features of the invention thereby enables the conventional thermostatic valve and by-pass line to be removed from the engine cooling circuit, thereby making the whole system less bulky.

Furthermore, spring 20 is designed so that valve 23 will open under a predetermined pressure difference between the inlet header tank 10 and the outlet header tank 11, even though the water temperature is high enough for it to be normally closed. Thus, if a blockage occurs in the tubes forming the radiator core 12, valve 23 will open to permit sufficient water to by-pass the tubes to avoid the back-pressure causing joint or hose leakage. Valve 23 will open even further as the pressure difference between header tanks increases.

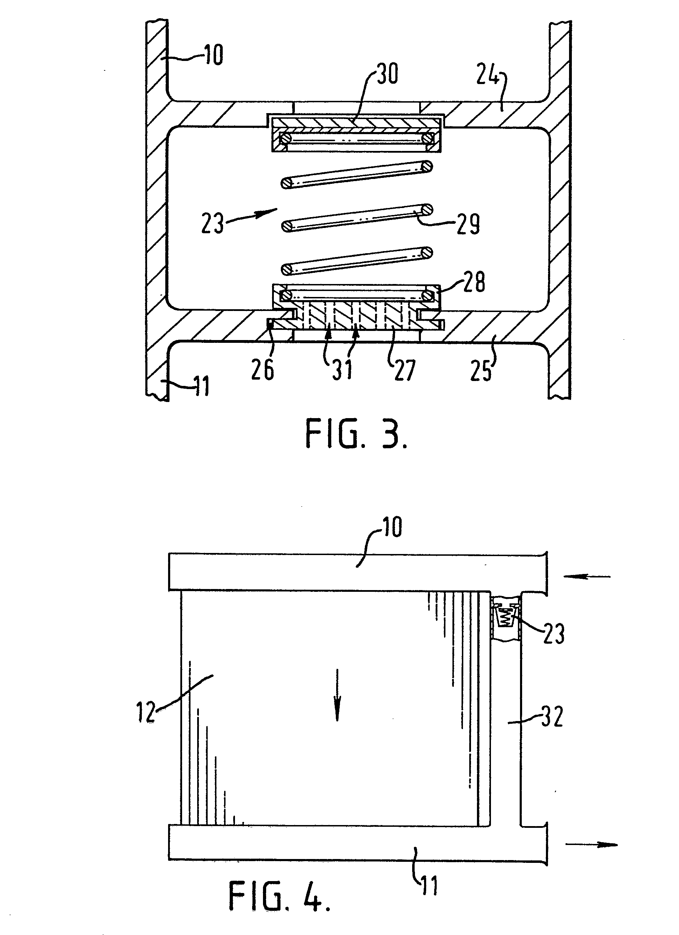

The details shown in Figure 3 shows a different valve arrangement between header tanks 10 and 11. In this embodiment there are two partitions 24 and 25, the first partition 24 forming a wall of the inlet header tank 10 having a central located passageway, and the second partition 25 forming a wall of the outlet header tank 11 having a slot with a semicircular end, the slot opening onto the core side of the combined header tanks 10, 11. The walls of the slot are provided with a continuous recess 26 which locates a retaining member 27 in the second partition 25. Retaining member 27 is parallel-sided with a circular end and can be slid into the slot from the core side of the header tanks 10, 11. A circular lip 28 is carried on the side of the retaining member 27 facing away from outlet header tank 11, and holds one end of a compression spring 29. The other end of spring 29 carries a closure 30 which is substantially similar to that described in the previous embodiment. The retaining member 27 has a number of orifices 31 extending through it within the lip 28 so that water can pass through the second partition 25. Alternatively, the retaining member 27 has a large single orifice extending through it for the same purpose. The operation of the valve arrangement is substantially similar to that of the first embodiment. The particular advantage of the Figure 2 arrangement is that the partitions 24, 25 can be integrally moulded with the header tanks 10, 11 and the valve arrangement can be simply pushed into place prior to assembly of the tanks 10, 11 as a single piece to the header plate of the core 12.

The heat exchanger shown in Figure 4 is also suitable for use as an automotive radiator, but in this embodiment the inlet header tank 10 is on the upper side of the core 12, whilst the outlet header tank 11 is on the lower side of the core 12. A passageway between the two tanks 10, 11 is provided by a pipe 32 extending along one side of the radiator. Pipe 32 houses a valve assembly similar to that shown at 23 in Figure 2 suitably located by stop means within pipe 32. The header tanks 10, 11 are suitably lengthened, or fitted with extension pieces, to accommodate the respective ends of pipe 32. Alternatively, the pipe 32 may extend between the inlet and outlet hoses to the radiator. Water or fluid to be cooled can thereby short-circuit the radiator core 12 if it is too cold or if the fluid pressure difference between the tanks 10, 11 is above a certain level.

The invention is also suitable for use in oil coolers for engines, hydraulic fluid coolers and other similar types of heat exchangers. It may also be applied to air-to-air charge air coolers for turbo-charged engines, in which case the fluid to be cooled is combustion air.

The heat exchanger may as an additional feature incorporate a switch which actuates an electrically-driven radiator cooling fan (not illustrated). The switch could be fitted to the valve arrangement 23 such that the fan is only actuated when the valve had closed beyond a predetermined position. Valve movement in the opposite direction past the or a predetermined position could be used to stop the fan drive, thereby providing fan cooling only when required, with consequent improved engine efficiency.

CLAIMS

1.    A heat exchanger for cooling a fluid, said heat exchanger comprising inlet (10) and outlet (11) header tanks and a heat exchange core (12) extending between said tanks (10, 11), and a communicating passageway between said inlet and outlet tanks or between respective conduits supplying fluid to and removing fluid from said inlet and outlet tanks (10, 11), characterised in that said passageway is fractionally openable or closable by means of a valve, said valve being constructed so as to tend to open the passageway in response to an increased fluid pressure drop between the header tanks and in response to a low temperature in the fluid being cooled, and to tend to close said passageway in response to a decreased fluid pressure drop between the header tanks and in response to a higher temperature in the fluid being cooled.

2.    A heat exchanger as claimed in Claim 1 characterised in that the valve (23) incorporates resilient spring biassing means (20, 29), arranged so as to tend to close the passageway in response to increased pressure drop between the header tanks (10, 11).

3.    A heat exchanger as claimed in Claim 2 characterised in that the spring biassing means (20, 29) is constructed and made of such a material that in use it tends to cause the valve (23) to open in response to decreasing temperature, and to close in response to increasing temperature.

4.    A heat exchanger as claimed in Claim 3 characterised in that the spring biassing means (20, 29) is made of a shape memory effect alloy.

5.    A heat exchanger as claimed in Claim 4 characterised in that the spring biassing means is in the form of a compression spring (20, 29) which has been manufactured and callibrated to expand a predetermined amount in response to a given temperature change.

0053003

M70017/EPO

6. A heat exchanger as claimed in any preceding claim characterised in that the inlet and outlet header tanks (10, 11) are on the same side of the core (12).

7. A heat exchanger as claimed in Claim 6 characterised in that its construction is so adapted that the incoming fluid to be cooled, or a proportion of it, is passed from the inlet header tank (10) across one part of the core (16) to a closed intermediate header tank (13) before returning across a second part of the core (17) to the outlet header tank (11) and wherein the passageway is provided in a partition (18) across a continuous enclosure forming the inlet and outlet header tanks (10, 11) and extending along one side of the core (12).

8. A heat exchanger as claimed in Claim 7 characterised in that a support and/or location (24, 25) for the valve is integrally moulded with the inlet/outlet header tank which is made of plastics material.

9. A heat exchanger as claimed in any of Claims 1 to 5 characterised in that the inlet and outlet tanks (10, 11) are on opposite sides of the core (12), and the passageway (32) extends between the inlet tank (10) and the outlet tank (11) or between respective conduits supplying fluid to and removing fluid from the inlet and outlet tanks (10, 11).

10. A heat exchanger as claimed in any preceding claim characterised in that the valve (23) is adapted to operate a switch which actuates an electrically driven heat exchanger cooling fan, such that the fan is only actuated when the valve is closed beyond a pre-determined position.

FIG. 1.

FIG. 2.

FIG. 3.

FIG. 4.

0053003

# EUROPEAN SEARCH REPORT

Application number

EP 81 30 5457

| | DOCUMENTS CONSIDERED TO BE RELEVANT | |
|---|---|---|

| Category | Citation of document with indication, where appropriate, of relevant passages | Relevant to claim |
|---|---|---|
| A | US - A - 4 209 062 (KARMAZIN)<br><br>* column 1, line 1 to column 2, line 27, line 54 to column 3, line 52; figures 1,2 *<br><br>-- | 1,9 |
| A | FR - A - 581 617 (DAIMLER BENZ)<br><br>* page 1, lines 1-52; figures *<br><br>-- | 1,9 |
| A | US - A - 2 500 472 (SOHLER)<br><br>* column 1, line 50 to column 3, line 8; figures 1-4 *<br><br>-- | 1 |
| A | US - A - 2 543 652 (WEY MOUTH)<br><br>* column 1, line 1 to column 2, line 7, column 3, line 61 to column 4, line 22; figure 1 *<br><br>-- | 1 |
| A | DE - B - 1 280 008 (M.A.N.)<br><br>* column 1, lines 1-11; column 3, lines 3-34; figures *<br><br>----- | 1 |

**CLASSIFICATION OF THE APPLICATION (Int. Cl. 3)**

F 01 P 11/14
11/02

**TECHNICAL FIELDS SEARCHED (Int.Cl. 3)**

F 01 P

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18-02-1982 | KOOIJMAN |

EPO Form 1503.1 06.78